# EUROPEAN PATENT SPECIFICATION

(11) **EP 4 156 964 B1**
(45) Date of publication and mention of the grant of the patent: **25.03.2026**
(21) Application number: 21733355.8
(22) Date of filing: 21.05.2021
(51) Int. Cl.: A23K 50/48, A23K 20/10, A23K 20/20

(54) **PROCESS FOR PREPARING PET FOOD AND PET FOOD OBTAINABLE THEREBY**
VERFAHREN ZUR HERSTELLUNG HAUSTIERFUTTERMITTEL UND DAMIT ERHÄLTLICHES HAUSTIERFUTTERMITTEL
PROCEDE DE PREPARATION D'UN ALIMENT POUR ANIMAUX DE COMPANIE ET ALIMENT AINSI OBTENU

(30) Priority: 26.05.2020 DE 102020114073
(43) Date of publication of application: 05.04.2023
(73) Proprietor: Mars Incorporated, McLean, VA 22101-3885 (US)
(72) Inventor: SCHLACHTER, Olaf, 27324 Eystrup (DE); WIEDENHOFF, Jeanne, 27283 Verden (DE); SCHLEBUSCH, Johannes, 27283 Verden (DE); DOOLEY, Kathleen, 27283 Verden (DE)
(74) Representative: Haseltine Lake Kempner LLP
(86) International application number: PCT/US2021/070597
(87) International publication number: WO 2021/243351

(56) References cited:
- CA-A1- 2 259 410
- CA-C- 2 259 410
- US-A1- 2009 098 267
- US-A1- 2009 214 738
- US-A1- 2019 174 808
- US-A1- 2019 200 656

## Description

### TECHNICAL FIELD

The present invention relates to a process for preparing pet food comprising pale meat and gravy, and a pet food obtainable thereby.

### BACKGROUND

Pet food compositions comprising a meat component and a gravy are disclosed in e.g., US2009/214738 A1; US 2019/174808 A1 and US 2009/098267 A1. Pale meat, such as chicken meat, typically together with a gravy, is one of the favorite pet foods for dogs.

However, pale meat, such as chicken meat, on its own does not deliver all of the necessary vitamins and minerals needed to deliver a complete and balanced nutritional profile for pets. In order to overcome this deficiency, a gravy system has been developed in which all required vitamins and minerals needed for dogs are delivered via the gravy in appropriate amount. Typically, the form of the minerals used in this standard is sulfates.

The process of the art for preparing a respective pet food comprises the step of first filling the pale meat into a container and then adding the gravy on top in a designated ratio. The filled container is then sealed and sterilized. As a disadvantage, however, upon completion of the sterilization step, the pale meat has a hue of grey discoloration which appears to the consumers to be a product of minor quality due to the grey color. It is assumed that the grey discoloration is substantially based on the use of copper sulfate as one of the minerals.

### SUMMARY

The present invention, which is defined by the claims, relates to a process for preparing pet food comprising pale meat and gravy comprising the steps of:
a) adding a chelating agent to the pet food, wherein the chelating agent is added by tumbling the pale meat in an aqueous solution of the chelating agent before adding the gravy to the pale meat;
b) filling the pet food into a container; and
c) sealing and sterilizing the filled container.

The present invention also relates to a product obtainable by that process.

In one aspect, the process may include: homogeneously mixing the pale meat and the gravy in a weight ratio of 50:50-98:2; filling the mixture obtained in step a) into a container; and sealing and sterilizing the filled container. Various embodiments of this process may alternatively or additionally include the following features: wherein no copper sulfate is added in the process; and wherein the gravy comprises water, a thickening agent, flavoring, additional minerals and vitamins. Various embodiments of this process may alternatively or additionally include the following features: wherein the chelating agent is at least one selected from sodium citrate, sodiumtripolyphosphate (STPP) tetrasodium pyrophosphate (TSPP), potassium citrate, potassium tripolyphosphate or tetrapotassium pyrophosphate (TKPP); wherein no copper sulfate is added in the process; and wherein the gravy comprises water, a thickening agent, flavoring, additional minerals and vitamins.

In another aspect, the process may include adding a copper compound other than copper sulfate to the pet food; filling the pet food into a container; and sealing and sterilizing the filled container. Various embodiments of this process may alternatively or additionally include the following features: wherein the copper compound is at least one selected from saturated copper proteinate, copper carbonate, copper chloride, yeast cells enriched with copper, and chelated forms of copper such as copper salts of lactic acid, malic acid or citric acid; wherein the copper compound other than copper sulfate is an ingredient of the gravy; wherein no copper sulfate is added in the process; and wherein the gravy comprises water, a thickening agent, flavoring, additional minerals and vitamins.

Pet food obtainable by the processes and features described in this summary section, as well as in the detailed description section below, is also within the scope of the current disclosure.

### DETAILED DESCRIPTION

It is therefore an object of the present invention to provide a process for preparing pet food comprising pale meat and gravy preventing the grey discoloration of pale meat, and a pet food obtainable thereby.

This object is achieved by a process for preparing pet food comprising pale meat and gravy, the process comprising the steps of:
a) adding a chelating agent to the pet food, wherein the chelating agent is added by tumbling the pale meat in an aqueous solution of the chelating agent before adding the gravy to the pale meat;
b) filling the pet food into a container; and
c) sealing and sterilizing the filled container.

The process may comprise the steps of:
a) adding a copper compound other than copper sulfate to the pet food;
b) filling the pet food into a container; and
c) sealing and sterilizing the filled container.

Further, according to the present invention is a pet food obtainable by the inventive processes.

Further embodiments are disclosed in the dependent claims.

It was surprisingly found that the grey discoloration of pale meat can be substantially prevented which is typically observed in the art due to the mineral supplementation required to make a pale meat product complete and balanced for dogs.

Consumers are well aware about differences between red meat on the one hand and pale meat on the other hand, which can be differentiated based on the amount of myoglobin. Red meat contains substantially more myoglobin than pale meat. When used in the present invention, the term "pale meat" is to be understood to comprise poultry, such as chicken, duck, turkey, pheasant, lamb, goat, rabbit, veal and the like as well as pale fish meats such as white fish, cod, haddock, trout, carp and salmon.

In one embodiment, the pale meat is light muscle meat. An example of light muscle meat is cooked/steamed chicken breast.

The term "homogeneously mixing" is to be understood in that pale meat and gravy are mixed in such a manner that a homogeneous mixture is obtained, i.e. the liquid phase is evenly distributed onto and in-between the pale meat pieces. Rather, the mixture has the form of a slurry. The homogeneous mixing provides an even concentration of the gravy (liquid) phase onto the surface of the meat pieces.

The homogeneous mixing quality of a given batch mixer can be measured, for example, by filling 700 kg of thawed chicken breast meat as pale meat and 300 kg of a gravy into a mixer to utilize 50-90 % of its mixing volume. This mixture is then mixed until the gravy is evenly distributed around the chunks. A pattern of the mixer surface is then defined consisting of 4-10 locations on the mixer surface e.g. in a rectangular mixing device: each corner and each middle of any side close to the inner mixer wall. 100 g samples are then being secured from each spot as a reference samples. Then a tracer substance (100 g/1000 kg), for example CuSO4*5H2O is added to the mixer. The mixing operation is then started with a fixed speed of the mixing devices and the mixing time is recorded. Every 2 - 5 min the mixer is stopped and at the 4-10 predefined spots on the surface of the mixer, 100 g samples each are being secured and labelled with the mixing time and the location. The mixing is then continued and the procedure of taking samples is being repeated every 2 - 5 min. All samples (coded by time and location in the mixer) are then being reduced to ash at 400 °C and analyzed on their concentration of the tracer substance i.e. by Atomic Absorption (AA) Spectroscopy, checking beforehand, that the reference samples did contain no or very low concentrations of the added tracer substance.

The results of the tracer substance by location and time are being analyzed in such a way, that for each mixing time the mean value (x) of the tracer found, the standard deviation (s) of the samples of the different locations are calculated and the variation coefficient (v) in [%] is calculated as x*s*100. The mixing time, once the coefficient of variation reaches a predefined value i.e. 5 % or lower is regarded as the mixing time for the chosen mixer and applied mixing conditions. Samples taken from the mixer after the defined mixing time under the defined mixing conditions are considered as being homogeneous.

The chelating agent is, in one embodiment, present in the finally prepared pet food in an amount of 0.1-0.5 wt%, based on the total weight of the pet food.

The process of the invention comprises the steps of filling the pet food into a container, followed by sealing and sterilizing the filled container.

Further embodiments are disclosed in the dependent claims.

For filling the pet food into a container, standard means may be utilized. While in alternative 1, the homogeneous mixture of pale meat and gravy is filled into a container as "one shot", pale meat and gravy may be filled into the container of the second and third alternative processes in a subsequent order, for example first filling the pale meat into the container, followed by filling the gravy.

Also for sealing and sterilizing the container, standard methods well known in the art can be chosen together with appropriate pressure and temperature regimes to effect sufficient sterilization of the filled and sealed container.

In one embodiment, a copper compound other than copper sulfate may be added to a homogeneous mixture of pale meat and gravy.

The pet food according to the present invention does typically not include anyone of copper amino acid complex, copper amino acid chelate, copper glycine complex, copper proteinate, menadione sodium bisulfite complex and disodium pyrophosphate.

### Examples

Hereinafter, the function and effect of the present invention will be described in more detail by way of specific examples of the invention. However, these examples are set forth to illustrate the invention, and the scope of the invention is not limited thereto.

### Preparation of chicken meat

Frozen chicken breast was thawed. The chicken breast was then cooked and cut into pieces having an appropriate size.

### Preparation of gravy

Gravy was prepared by adding about 40 g tapioca starch and 2.2 g xanthan gum into 957.8 g water and stirring thereof. Further, additives, such as minerals and vitamins, may be added, as desired.

### Example 1 - Preparing pet food by homogeneously mixing chicken meat and gravy (not according to the present invention)

70 wt% of chicken meat, as prepared above, and 30 wt% of gravy, as prepared above, based on the total weight of the pet food, are homogeneously mixed. The mixture is filled into a container, which container is thereafter sealed and sterilized.

After inspection of the sterilized pet food, a very slightly grey color only can be seen onto the surfaces of the chicken meat pieces.

### Example 2 - Addition of a chelating agent

The chicken meat as prepared above is tumbled in an aqueous solution containing sodium tripolyphosphate (STPP) as a chelating agent. STPP is used in an amount, so that 0.3 wt% of STPP can be found in the finally prepared pet food. After tumbling, the chicken meat is left for 15 minutes, so that the solution can better get into the meat. The meat is sucking up the solution totally.

The thus prepared chicken meat is filled into a container, followed by filling the gravy as prepared above. The weight ratio of chicken meat:gravy is 70:30. Again, the filled container is sealed and sterilized.

After inspection of the filled container, no grey discoloration is detected.

### Example 3 - Adding a copper compound other than copper sulfate

Chicken meat as prepared above is filled into a container. A gravy, as prepared above, is then subsequently filled in, to which gravy copper proteinate has been added. The weight ratio of chicken meat:gravy is 70:30, wherein the copper proteinate has been added, so that the final amount of copper proteinate in the pet food is 0.05 wt%, based on the total weight of the pet food.

The filled container is sealed and sterilized.

After inspection of the pet food in the filled container, no grey discoloration can be detected. It was further surprisingly found that the pet food prepared according to the inventive processes does not have an impact to faeces quality.

## Claims

1. A process for preparing pet food comprising pale meat and gravy, the process comprising the steps of:
a) adding a chelating agent to the pet food, wherein the chelating agent is added by tumbling the pale meat in an aqueous solution of the chelating agent before adding the gravy to the pale meat;
b) filling the pet food into a container; and
c) sealing and sterilizing the filled container.

2. A process as claimed in claim 1, wherein the chelating agent is at least one selected from sodium citrate, sodiumtripolyphosphate (STPP) tetrasodium pyrophosphate (TSPP), potassium citrate, potassium tripolyphosphate or tetrapotassium pyrophosphate (TKPP).

3. A process as claimed in claim 1 or claim 2, comprising homogeneously mixing the pale meat and the gravy in a weight ratio of 50:50-98:2 before step b).

4. A process as claimed in any preceding claim, the process comprising adding a copper compound other than copper sulfate to the pet food.

5. A process as claimed in claim 4, wherein the copper compound is at least one selected from saturated copper proteinate, copper carbonate, copper chloride, yeast cells enriched with copper, and chelated forms of copper such as copper salts of lactic acid, malic acid or citric acid.

6. A process as claimed in claim 4 or 5, wherein the copper compound other than copper sulfate is an ingredient of the gravy.

7. A process as claimed in any of the preceding claims, wherein no copper sulfate is added in the process.

8. A process as claimed in any of the preceding claims, wherein the gravy comprises water, a thickening agent, flavoring, additional minerals and vitamins.

9. Pet food, obtainable by the process according to any of the claims 1-8.

## Patentansprüche

1. Verfahren für ein Herstellen von Haustierfutter, bestehend aus hellem Fleisch und Soße, der Prozess umfassend die Schritte:
a) Zugeben eines Chelatbildners zu dem Haustierfutter, wobei der Chelatbildner durch Tumbling des hellen Fleisches in einer wässrigen Lösung des Chelatbildners vor einem Zugeben der Soße zu dem hellen Fleisch zugegeben wird;
b) Füllen des Haustierfutters in einen Behälter; und
c) Versiegeln und Sterilisieren des befüllten Behälters.

2. Verfahren nach Anspruch 1, wobei der Chelatbildner mindestens einer ist, der ausgewählt ist aus Natriumcitrat, Natriumtripolyphosphat (STPP), Tetranatriumpyrophosphat (TSPP), Kaliumcitrat, Kaliumtripolyphosphat oder Tetrakaliumpyrophosphat (TKPP).

3. Verfahren nach Anspruch 1 oder Anspruch 2, umfassend homogenes Mischen des hellen Fleisches und der Soße in einem Gewichtsverhältnis von 50 : 50 bis 98 : 2 vor Schritt b).

4. Verfahren nach einem der vorstehenden Ansprüche, wobei das Verfahren ein Zugeben einer anderen Kupferverbindung als Kupfersulfat zu dem Haustierfutter umfasst.

5. Verfahren nach Anspruch 4, wobei die Kupferverbindung mindestens eine ist, die ausgewählt ist aus gesättigtem Kupferproteinat, Kupfercarbonat, Kupferchlorid, mit Kupfer angereicherten Hefezellen und chelatisierten Formen von Kupfer, wie beispielsweise Kupfersalzen von Milchsäure, Apfelsäure oder Zitronensäure.

6. Verfahren nach Anspruch 4 oder 5, wobei die andere Kupferverbindung als Kupfersulfat ein Bestandteil der Soße ist.

7. Verfahren nach einem der vorstehenden Ansprüche, wobei in dem Verfahren kein Kupfersulfat zugegeben wird.

8. Verfahren nach einem der vorstehenden Ansprüche, wobei die Soße Wasser, ein Verdickungsmittel, Aromastoffe, zusätzliche Mineralien und Vitamine umfasst.

9. Haustierfutter, erhältlich durch das Verfahren nach einem der Ansprüche 1 bis 8.

## Revendications

1. Procédé de préparation d'aliments pour animaux domestiques comprenant de la viande pâle et du jus, le procédé comprenant les étapes suivantes :
a) l'ajout d'un agent chélatant à l'aliment pour animaux domestiques, dans lequel l'agent chélatant est ajouté par barattage de la viande pâle dans une solution aqueuse de l'agent chélatant avant d'ajouter le jus à la viande pâle ;
b) le remplissage de l'aliment pour animaux domestiques dans un récipient ; et
c) le scellage et la stérilisation du récipient rempli.

2. Procédé selon la revendication 1, dans lequel l'agent chélatant est au moins l'un choisi parmi le citrate de sodium, le tripolyphosphate de sodium (STPP) le pyrophosphate tétrasodique (TSPP), le citrate de potassium, le tripolyphosphate de potassium ou le pyrophosphate tétrapotassique (TKPP).

3. Procédé selon la revendication 1 ou la revendication 2, comprenant le mélange homogène de la viande pâle et du jus selon un rapport pondéral de 50:50-98:2 avant l'étape b).

4. Procédé selon l'une quelconque des revendications précédentes, le procédé comprenant l'ajout d'un composé de cuivre autre que le sulfate de cuivre à l'aliment pour animaux domestiques.

5. Procédé selon la revendication 4, dans lequel le composé de cuivre est au moins l'un choisi parmi le protéinate de cuivre saturé, le carbonate de cuivre, le chlorure de cuivre, les cellules de levure enrichies en cuivre, et les formes chélatées du cuivre telles que les sels de cuivre de l'acide lactique, de l'acide malique ou de l'acide citrique.

6. Procédé selon la revendication 4 ou 5, dans lequel le composé de cuivre autre que le sulfate de cuivre est un ingrédient de la sauce.

7. Procédé selon l'une quelconque des revendications précédentes, dans lequel aucun sulfate de cuivre n'est ajouté dans le procédé.

8. Procédé selon l'une quelconque des revendications précédentes, dans lequel la sauce comprend de l'eau, un agent épaississant, un arôme, des minéraux et vitamines supplémentaires.

9. Aliment pour animaux domestiques, pouvant être obtenu par le procédé selon l'une quelconque des revendications 1 à 8.
